# EUROPÄISCHE PATENTSCHRIFT

(11) **EP 1 586 925 B1**
(45) Veröffentlichungstag und Bekanntmachung des Hinweises auf die Patenterteilung: **05.12.2007**
(21) Anmeldenummer: 05102777.9
(22) Anmeldetag: 08.04.2005
(51) Int. Cl.: G02B 7/00, G02B 21/00, F16M 11/02

(54) **Stativ, insbesondere für Operationsmikroskope, mit einem Kraftspeicherelement**
Stand, in particular for surgical microscopes, having an energy storage element
Statif, en particulier pour une microscope chirurgical, ayant un élément pour le stockage de l'énergie

(30) Priorität: 12.04.2004 DE 102004017970
(43) Veröffentlichungstag der Anmeldung: 19.10.2005
(73) Patentinhaber: Leica Microsystems (Schweiz) AG, 9435 Heerbrugg (CH)
(72) Erfinder: Metelski, Andrzej, 8590 Romanshorn (CH)
(74) Vertreter: Rosenich, Paul

(56) Entgegenhaltungen:
- US-A- 4 523 732
- US-A- 6 082 552
- US-A1- 2002 100 851
- PATENT ABSTRACTS OF JAPAN Bd. 2000, Nr. 09, 13. Oktober 2000 (2000-10-13) -& JP 2000 172183 A (OKAMURA CORP), 23. Juni 2000 (2000-06-23)

## Beschreibung

Die Erfindung betrifft ein Stativ, insbesondere ein Stativ für ein Operationsmikroskop, mit einem oder mehreren Kraftspeicherelementen nach dem Oberbegriff des Anspruchs 1. Unter Kraftspeicherelementen versteht man im Allgemeinen Elemente, die geeignet sind, Energie bzw. Kraft aufzunehmen und definiert wieder abzugeben, bzw. in eine andere Energieform umzuwandeln. Es handelt sich hierbei um Federn mechanischer, pneumatischer, hydraulischer oder hiervon kombinierter Art oder um Stoßdämpfer. Im Stativbau, insbesondere für Operationsmikroskope, kommen in erster Linie Gasfedern zum Einsatz, es sind jedoch auch Federn der erwähnten anderen Arten realisiert.

Um einen möglichst platzsparenden Stativaufbau zu erreichen, verzichten Stative mit Kraftspeicherelementen auf einen als Gegengewicht ausgestalteten Gegenarm oder auf ein Gegengewicht, das dem Horizontalträger gegenüberliegt.

Herkömmliche Stative mit Gasfederabstützung haben sich bewährt, sind jedoch nur in solchen Stativen eingesetzt, die eine mäßige Bewegungshomogenität aufweisen. Für Stative, die über einen größeren Bewegungsraum und/oder komfortablere Bewegungsführung verwendet werden sollen, werden andere Abstützarten verwendet, wie etwa das waagenähnliche Gewicht-Gegengewichts-System.

Herkömmliche, gasfederabgestützte Stative haben den Nachteil, dass aufgrund der sogenannten "Kosinus-Funktion" der Lasthebelwirkung des Mikroskops entlang seines Bewegungsbogens in der Vertikalen eine unterschiedliche Abstützwirkung in Abhängigkeit von der Winkelstellung des Horizontalträgers zum Vertikalträger vorliegt. In der Schwenkposition des Stativs, in der sich die Last am weitesten entfernt vom Vertikalträger befindet (Horizontalträger und Vertikalträger bilden einen rechten Winkel), ist auch die (Hebel-) Kraft auf die als Stützhebel wirkende Gasfeder am größten. Unter der genannten Schwenkbewegung ist die Verschwenkung der Last in der Vertikalen gemeint und nicht in der Horizontalen.

In der EP-B1-433 426 ist eine Ausgleichsvorrichtung mit einer Gasfeder als Kraftspeicherelement beschrieben, die ein bogen- oder nierenförmiges Führungs-Langloch am Vertikalträger umfasst, in der das proximale Ende einer Kolbenstange geführt ist, während der Zylinder als distales Ende der Gasfeder am Horizontalträger schwenkbar befestigt ist. (Im weiteren Verlauf der vorliegenden Anmeldung steht "proximal" für "dem Vertikalträger zugewandt" und "distal" für "dem Vertikalträger abgewandt, zum freien Ende des Horizontalträgers hin".) Dieser Aufbau mit bogenförmigem Führungs-Langloch soll theoretisch verhindern, dass sich die Hysterese der Gasfeder nachteilig bemerkbar macht Unter Hysterese versteht man allgemein die Abhängigkeit des physikalischen Zustands eines Objekts von vorausgegangenen Zuständen, die auf der Restwirkung (Remanenz) nach Beseitigung der einwirkenden physikalischen Größe bzw. Kraft beruht

In der Praxis hat sich jedoch gezeigt, dass dieser bekannte Aufbau insofern nachteilig ist, als das proximale Ende der Kolbenstange nicht kontinuierlich in dem bogenförmigen Führungs-Langloch wandert, sondern im Anwendungsfall von einer Extremlage zur anderen kniehebelartig springt, was für einen Anwender eine zusätzliche Bewegung über den Springpunkt hinweg erfordert, um die Umstellung der Abstützung in dem bogenförmigen Führungs-Langloch zu erreichen.

Ein optimal ausbalancierbares, homogen in der Vertikale schwenkbares Stativ weist Gleichheit zwischen Gewichtsmoment und Stützmoment auf. Die Ungleichheit von diesen beiden Momenten äußert sich für den Operateur auf zwei nachteilige Arten: Entweder es bewegt sich das Mikroskop in einer anderen Lage selbsttätig oder der Operateur benötigt für einen Bereich eine bestimmte Schwenkkraft, um das Mikroskop zu bewegen, dann plötzlich jedoch eine andere. Die jedoch optimale, wünschenswerte Gleichheit zwischen Gewichts- und Stützmoment liegt in der Wirklichkeit aufgrund tatsächlicher physikalischer bzw. geometrischer Gegebenheiten nicht vor, sondern nur für einen bestimmten Bereich. Dieser Bereich kann in der Mitte des gesamten Schwenkwinkel-Bereichs liegen, oder auch am Rande, aber es wird mit den bekannten Stativ-Lösungen mit Kraftspeicherelementen immer ein Kompromiss zwischen optimalem und nachteiligem Bereich geschlossen. Dieser Kompromiss wird im Stand der Technik dadurch zu minimieren versucht, dass z.B. die Gewichtsschwankungen am Mikroskop so gering wie möglich gehalten werden, der Schwenkwinkel so klein wie möglich gehalten wird oder die Differenz der Momente in erhöhter Systemreibung versteckt wird. Diese Maßnahmen setzen jedoch dem Stativbau seine Grenzen.

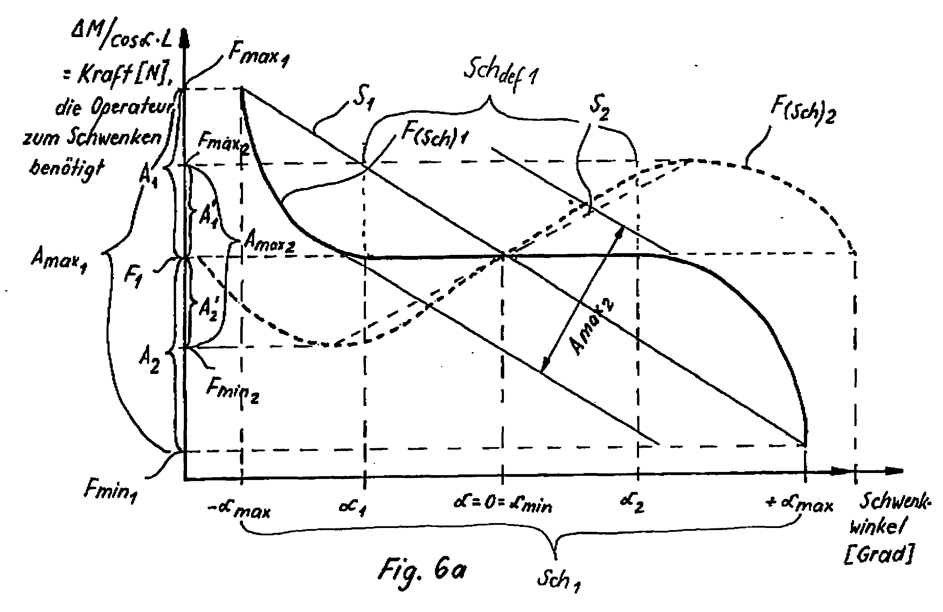

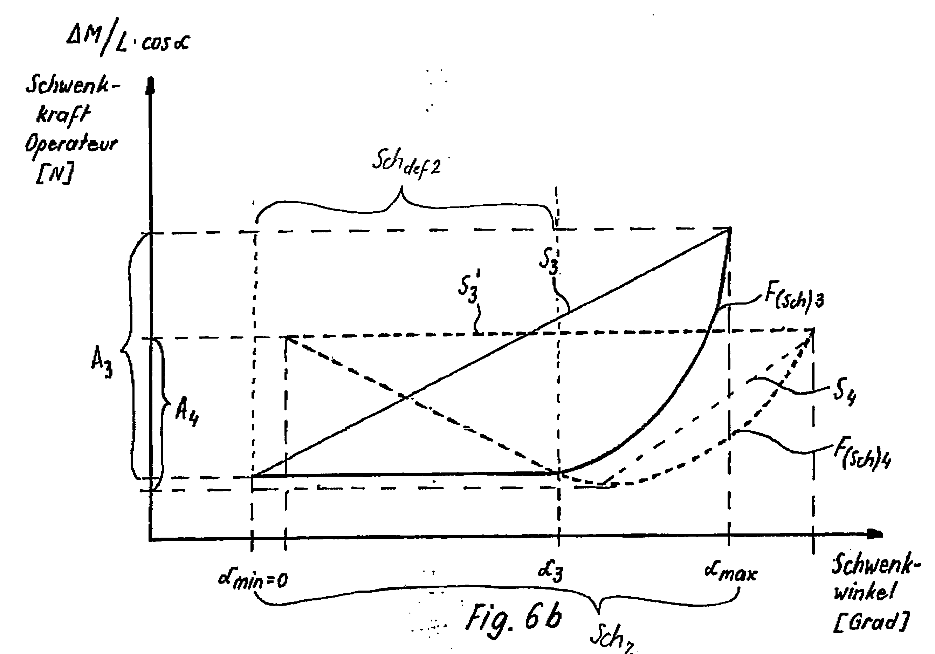

Üblicherweise ist der optimale Bereich in der Mitte des gesamten Schwenkwinkel-Bereichs angesiedelt, der in etwa der Horizontallage des Horizontal-Armes entspricht. Daraus ergibt sich für die Darstellung in einem Schaubild für die Differenz der Momente eine wellenförmige Kurve z.B. Fig. 6a (Funktion der Schwenkkraftkurve). Es gibt jedoch auch Stativ-Einstellungen, die die Zur-Verfügung-Stellung des optimalen Bereichs von Gleichwertigkeit zwischen Gewichts- und Stützmoment z.B. im unteren Schwenkwinkel-Bereich bieten. In diesem Falle entspricht die Kurve einer nicht wellenförmigen, bogenförmigen Funktionskurve mit angefügter Geraden, siehe z.B. Fig. 6b.

Der Erfinder erkannte, dass nach Auffinden bzw. Berechnung des proximalen Anlenkpunktes für einen möglichst breiten optimalen Bereich von Gleichheit zwischen den Momenten eine absichtlich vorgenommene, geringfügige Verstellung des proximalen Anlenkpunktes zu Ungunsten des optimalen Bereichs zu einer deutlichen Reduktion der maximalen Differenz zwischen den Momenten führt. Dieses Ergebnis ist unerwartet, weil man annehmen müsste, dass eine Verschiebung des optimalen Anlenkpunktes zu einer noch höheren Differenz zwischen den Momenten führt. Die Maximal-Differenz nimmt jedoch ab und zwar wesentlich, nämlich um ca. mehr als die Hälfte. Auch das Ausmaß dieser Verbesserung ist unerwartet hoch. Als Diagramm dargestellt, verwandelt sich die wellenförmige Kurve in eine sattelförmige Kurve bzw. die bogenförmige Funktionskurve mit anschließender Geraden in eine neue Kurve mit wesentlich geringerer Amplitude.

Der Erfindung liegt somit die Aufgabe zugrunde, ein verbessertes System mit Kraftspeicherelement-Abstützung, insbesondere Gasfeder-Abstützung zu finden, das einerseits auf unterschiedliche Lasten einstellbar ist und andererseits den nachteiligen Kosinus-Effekt des Horizontalträgers unter der Last des Mikroskops zu vermeiden oder so zu vermindern, dass er nicht mehr stört. Außerdem soll der Kniehebelsprungeffekt vermieden werden. Ebenso soll die Erkenntnis des Erfinders hinsichtlich der Schwenkwinkelgeometrie und des Schwenkwinkelverhaltens bei gattungsgemäßen Stativen eingesetzt und ausgenutzt werden, um eine Verbesserung bei der Bedienbarkeit bzw. des Bedienkomforts des Stativs zu erreichen.

Gelöst wird diese Aufgabe durch eine Verstellvorrichtung für einen Anlenkpunkt des Kraftspeicherelements, vorzugsweise für jenen proximalen Anlenkpunkt, der sich am Vertikalträger des Stativs befindet gemäß den Merkmalen des Anspruchs 1. Dabei ist eine Verstellvorrichtung vorgesehen, die erfindungsgemäß horizontal und vertikal wirkt. Unter horizontal ist jede Verstellrichtung zu verstehen, die quer zur Längsachse des Stativträgers (Lot) liegt. Unter vertikal jede Verstellrichtung, die parallel hierzu ist. Dabei kann es sich um eine Gerade oder auch um einen Bogen handeln. Durch diese erfindungsgemäße Verstelleinrichtung kann in einer Ebene, die aus dem Vertikalträger und dem horizontal abragenden Horizontalträger gebildet wird, jeder beliebige Anlenkpunkt zwischen Vertikal- und Horizontalträger eingestellt werden. Dadurch kann der Anlenkpunkt erfindungsgemäß nach Auffinden bzw. Berechnung desjenigen Anlenkpunktes für einen möglichst breiten optimalen Bereich von Gleichheit zwischen den Momenten (Grundausbalancierung) absichtlich in jede beliebige Stellung zwischen Vertikal- und Horizontalträger verfahren werden.

Die Patentschrift US 4,523,732 offenbart eine ähnliche Verstellung des proximalen Anlenkpunktes, die jedoch entlang einer Verstellachse erfolgt, die in einem Winkel von 18-24 Grad zur Vertikalen steht. Eine beliebige Verstellung des Anlenkpunktes ist also gerade nicht erwünscht Sie geschieht zur Verstellung der Federkraft der Zug- oder Druckfeder, sodass eine erste Grundbalancierung bei verändertem Gewicht am Mikroskoparm (trotz z.B. schwererem Gewicht soll die Horizontallage des Tragarmes beibehalten werden) rasch gefunden werden kann. Eine darauf folgende und in jeden Punkt beliebig durchführbare Verstellung offenbart diese Patentschrift nicht

Die erfindungsgemäße Verstellung des proximalen Anlenkpunktes kann erfindungsgemäß bevorzugt auf folgende drei Varianten geschehen: Eine erste Variante besteht in einer Drehung des Anlenkpunktes um einen ermittelten Drehpunkt, die zweite ist eine rein lineare Verschiebung des Anlenkpunktes entlang einer Achse X₁, die parallel zu dem Horizontalträger liegt. Die dritte Variante ist eine Verschiebung des Anlenkpunktes, gefolgt von einer Drehung oder umgekehrt. Bevorzugt ist es bei dieser Ausführungsform dem Anwender überlassen, ob er zuerst die lineare oder zuerst die bogenförmige Verstellung vornimmt.

Die beschriebene horizontale Verstellung des Anlenkpunktes (sei es durch Drehung oder Verschiebung entlang der Achse X oder einer Kombination davon) ist somit für ein bestimmtes Gewicht der Last (Mikroskop) definiert. Um nun auch Einstellungen für andere Gewichte zu realisieren, ist erfindungsgemäß eine zusätzlich angeordnete und kombinierte Verstellung in einer etwa vertikalen Richtung entlang einer Achse Z (parallel zur Längsachse des Ständers (Lot) vorgesehen. Vorzugsweise wird im Rahmen der Erfindung diese Verstellung jedoch entlang der Achse Z nicht linear, sondern bogenförmig realisiert.

In der vorliegenden Anmeldung ist eine Verstellvorrichtung offenbart, die aus Kostengründen nicht an jedem hergestellten Stativ angeordnet sein muss, sie kann auch im Sinne einer "Eichvorrichtung" zum Herstellen von Stativen ohne Verstellvorrichtung eingesetzt werden. Dabei werden jene Stative entsprechend der Eichvorrichtung so eingestellt, dass sie für ein bestimmtes Gewicht den Anlenkpunkt optimal am Ständer festlegen.

Es wird ausdrücklich auf eine mögliche Kombinierbarkeit dieser Anmeldung mit einer zeitgleich von der gleichen Anmelderln angemeldeten Erfindung (DE 102004017971.9) verwiesen. Dort ist ein Stativ mit einem Kraftspeicherelement vorgestellt, das mit der vorliegenden Verstellvorrichtung frei kombiniert werden kann.

Weitere Ausbildungen der Erfindung sind in den Figuren und in den abhängigen Patentansprüchen angegeben.

Die Bezugszeichenliste ist Bestandteil der Offenbarung.

Anhand von Figuren wird die Erfindung symbolisch und beispielhaft näher erläutert.

Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei
Fig. 1 - einen Stativaufbau gemäß Stand der Technik;
Fig. 2a-c - eine schematische Darstellung des sogenannten "Kosinus-Effekts" in drei verschiedenen Lagen;
Fig. 3 - denjenigen Teil einer erfindungsgemäßen Verstellvorrichtung, mit der der proximale Anlenkpunkt mittels einer Drehung in etwa horizontal verstellt werden kann;
Fig. 4 - denjenigen Teil einer Verstellvorrichtung an einem Stativ, die den proximalen Anlenkpunkt des Kraftspeicherelements sowohl in der in Fig. 3 gezeigten Drehrichtung, als auch in einer Richtung entlang einer X-Achse verstellt, die in etwa parallel zum Horizontalträger liegt;
Fig. 5 - eine erfindungsgemäße Verstellvorrichtung an einem Stativ, die den proximalen Anlenkpunkt des Kraftspeicherelements sowohl in der in Fig. 3 gezeigten Drehrichtung, als auch in der in Fig. 4 gezeigten X-Verschleberichtung, als auch in einer Höhenrichtung entlang einer Achse Z verstellt;
Fig. 6a - ein Diagramm zu den Kurven der Differenz zwischen Gewichts- und Stützmoment im Falle eines in etwa mittig optimierten Schwenkwinkel-Bereichs und
Fig. 6b - ein Diagramm zu den Kurven der Differenz zwischen Gewichts- und Stützmoment im Falle eines Schwenkwinkel-Bereichs, der im marginalen Bereich optimiert ist.

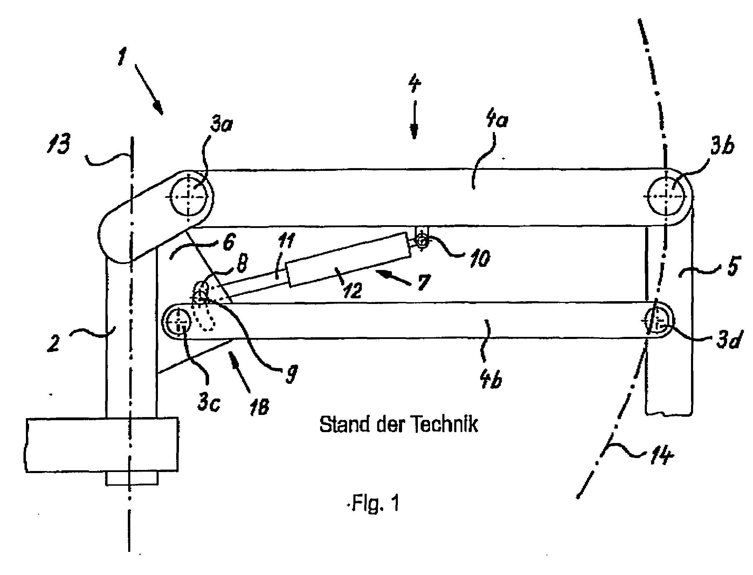

In Fig. 1 ist schematisch eine Stativanordnung 1 gemäß Stand der Technik dargestellt. Das Stativ 1 besteht aus einem Vertikalträger 2 und aus einem Horizontalträger 4, der als Parallelogrammträger mit einem oberen Horizontalträgerarm 4a und einem unteren Horizontalträgerarm 4b ausgebildet ist. An einem distalen Anlenkpunkt 10 an dem oberen Horizontalträgerarm 4a des Horizontalträgers 4 und an einem proximalen Anlenkpunkt 9 in einer Platte 6 ist als stützendes Kraftspeicherelement 7 eine Gasfeder angeordnet. Das Stativ 1 weist als Mittel zur positiven Beeinflussung der Hysterese-Eigenschaften eine Verstellvorrichtung 18 auf, die nicht linear wirkt, sondern durch ein bogenförmiges Führungs-Langloch 8 eine radiale Verstellung des proximalen Anlenkpunktes 9 ermöglicht.

Die Gasfeder 7 ist mit einem Zylinder 12 am distalen Anlenkpunkt 10 und mit einer Kolbenstange 11 am proximalen Anlenkpunkt 9 angeordnet. Des Weiteren weist diese Stativanordnung Gelenke 3a-d und einen Mikroskopträger 5 auf. Um die Schwenkachse 13 schwenkt der Horizontalträger 4 in der Horizontallage. In der Vertikallage schwenkt der Horizontalträger 4 entlang eines Bewegungsbogens 14.

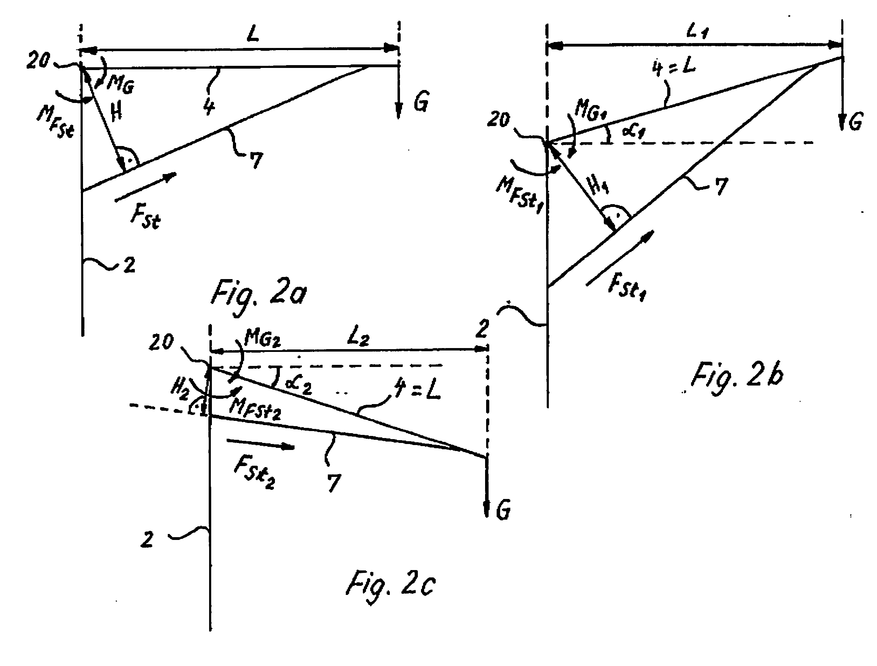

In Fig. 2a-c ist schematisch die Hebelwirkung in Abhängigkeit von verschiedenen Winkeln des Horizontalträgers 4 zum Vertikalträger 2 dargestellt (sogenannter "Kosinus-Effekt"). Fig. 2a zeigt den Horizontalarm 4 in einer waagerechten Position (Winkel zwischen Vertikalträger 2 und Horizontalarm 4 = 90 Grad). Der Horizontalarm 4 trägt am distalen Ende die Last G und entspricht in dieser Position dem Hebelarm L. Die Kraft F_{St}, mit der das Kraftspeicherelement 7 den Hebelarm L abstützt, befindet sich in einer (virtuellen) Entfernung H vom Anlenkpunkt 20 des Horizontalträgers 4 am Vertikalträger 2. In dieser Position entspricht L·G = H·F_{St}. Idealerweise sind die gegeneinander wirkenden Momente im Anlenkpunkt 20, nämlich das Gewichtsmoment M_{G} und das Stützmoment M_{FSt}, gleich groß. Fig. 2b zeigt den Horizontalarm 4 in einer um einen Winkel α₁ hochgeschwenkten Position. Der Hebelarm L₁ entspricht nun L/cos α₁. Nun ist L₁-G = H₁-F_{St1}. Fig. 2c zeigt den Horizontalarm 4 in einer nach unten um einen Winkel α₂ verschwenkten Position. Der Hebelarm L₂ entspricht nun L/cos *α₂* und es gilt die Gleichung L₂-G = H₂-F_{St2}.

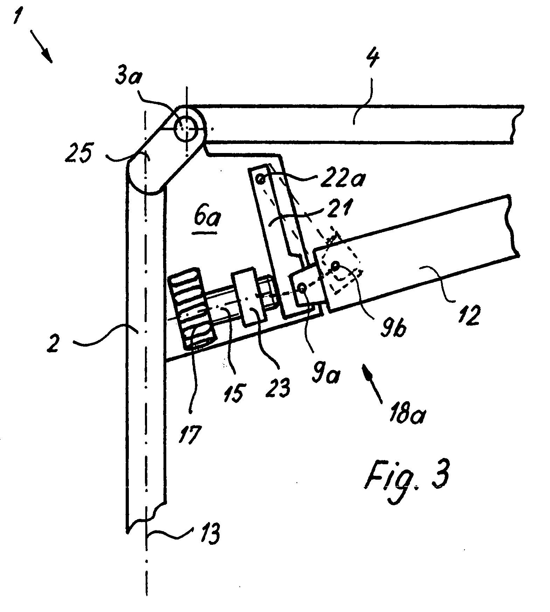

Fig. 3 zeigt denjenigen Teil einer erfindungsgemäßen Stativanordnung 1, die eine Verstellvorrichtung 18a zum Verdrehen des proximalen Anlenkpunktes 9a in einen proximalen Anlenkpunkt 9b aufweist. Dieses wird dadurch erreicht, indem das Anlenkelement 21 um eine Fixierung 22a drehbar auf einer Platte 6a gelagert ist und eine Betätigung der Gewindespindel 15 via Handrad 17 oder motorischer Steuerung innerhalb der fix angeordneten Spindelmutter 23 einen Druck an der Rückseite des Anlenkelements 21 aufbaut oder weg nimmt. Somit schwenkt das Anlenkelement 21 um die Fixierung 22a und der proximale Anlenkpunkt 9a beschreibt eine kreisbogenförmige Bewegung zum proximalen Anlenkpunkt 9b. Die verschwenkbare Fixierung 22a kann auch am Vertikalträger 2 oder an einem Bauteil 25 angeordnet sein, das Vertikalträger 2 und Horizontalträger 4 verbindet. Diesen möglichen Fixierungen für das Anlenkelement 21 ist gemeinsam, dass sie fix zum Vertikalträger 2 sein müssen.

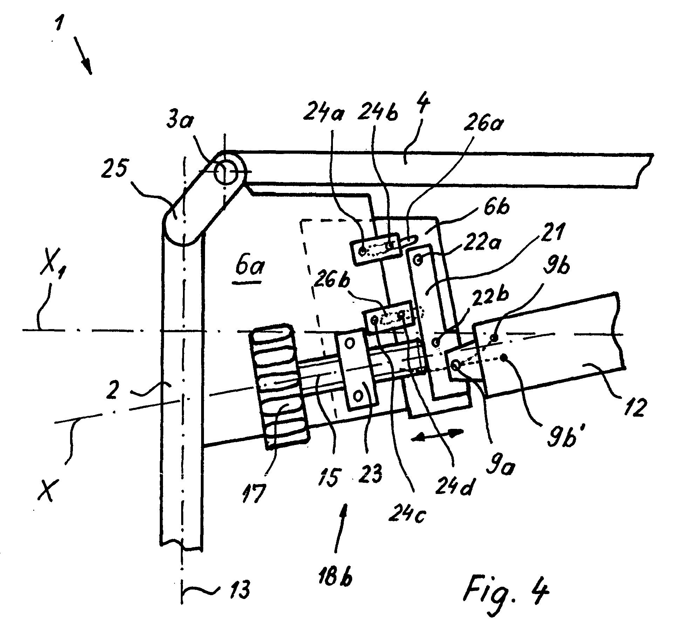

In Fig. 4 ist derjenige Teil einer Verstellvorrichtung18b gezeigt, die nicht nur radial, wie schon in Fig. 3 dargestellt, sondern auch linear in einer Richtung liegt, die den Achsen X oder X' oder einer zwischen X und X' liegenden Achse entspricht. Dieses kann grundsätzlich durch eine geführte Verstellbewegung der Platte 6a oder eines Teils der Platte 6b erreicht werden, sei es durch Führungsschlitten oder - wie dargestellt - mit Führungs-Langlöchern 26a und 26b für die Fixierungen 24b und 24d des beweglichen Teils der Platte 6b an dem fix am Vertikalträger 2 angeordneten Platten-Teil 6a. Die Fixierungen 24a und 24c sind fix.

Um eine möglichst kostengünstige Verstellvorrichtung zu realisieren, die mit nur einer Gewindespindel 15 auskommt, ist das Anlenkelement 21 mit einer entfernbaren Fixierung 22b ausgestattet. Soll nun der proximale Anlenkpunkt 9a verdreht werden, so müssen die Fixierungen 24b und 24d fest sein und die Fixierung 22b entfernt. Dadurch verschwenken Drehungen an der Gewindespindel 15 das Anlenkelement 21. Soll hingegen entlang der Achse X verschoben werden, so muss die Fixierung 22b fest sein und 24b und 24d lose.

Wie schon erwähnt, ist auch eine Verstellvorrichtung für eine Verstellung entlang einer Achse X₁ ohne Weiteres dadurch realisierbar, dass die Platte 6b mittels eines Führungsschlittens statt Führungs-Langlöchern 26a und 26b geführt auf der Platte 6a sitzt und auch mit Fixierungen vorgesehen ist.

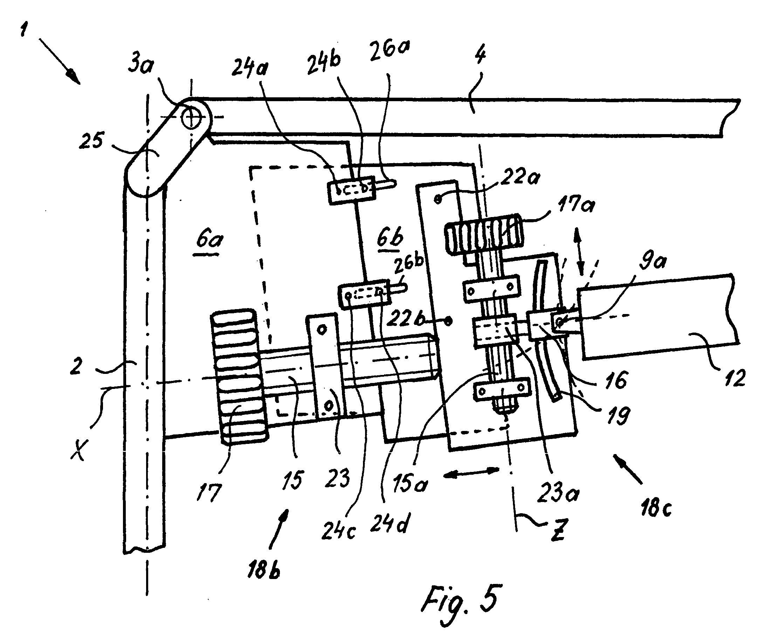

Fig. 5 zeigt über die Teil-Vemtellrnöglichkeiten gemäß Fig. 4 hinaus eine erfindungsgemäße Verstellung des proximalen Anlenkpunktes 9a auch in der Höhe, entlang einer Achse Z. Diese Verstellrichtung entspricht etwa einer Parallelen zu dem Vertikalträger 2. Eine Gewindespindel 15a, über ein Handrad 17a oder motorisch betreibbar, ist auf dem Anlenkelement 21 angeordnet und verstellt einen Schlitten 16, der bei Drehungen an der Gewindespindel 15a auf Führungen 19 entlang läuft. Der proximale Anlenkpunkt 9a ist an dem Schlitten 16 angelenkt. Die Führungen 19 können, wie hier dargestellt vorzugsweise bogenförmig ausgestaltet sein, lineare oder kombinierte Führungen sind jedoch auch denkbar.

Fig. 6a zeigt ein Diagramm, das die Kurve des Kraftaufwands für den Operateur zum Schwenken des Horizontalträgers 4 in der Vertikalen bzw. entlang des Bewegungsbogens 14 (siehe Fig. 1) zeit Dieser Kraftaufwand ist nichts anderes als die Differenz von Gewichts- M_{G} und Stützmoment M_{F} dividiert durch den jeweiligen Hebelarm L-cosα. Dieses Diagramm zeigt eine Ausbalancierung, die in einem mittigen Schwenkwinkel-Bereich von α₁ über α = 0 (Horizontalposition des Horizontalträgers 4) bis α₂ optimiert ist (Schdef1). Der Operateur muss in diesem Bereich eine Kraft F₁ aufwenden, die konstant bleibt. Über diesen Schwenkwinkel-Bereich hinaus steigt die Kraft F stetig an und erreicht in der Schwenkrichtung nach oben über den Schwenkwinkel α₁ hinaus eine Amplitude A₁ und nach unten eine Amplitude A₂. Daraus ergibt sich eine wellenförmige Schwenkkraft-Kurve F_{(Sch)1} mit einer Gesamtamplitude Aₘₐₓ₁ = A₁ + A₂. Der gesamte Schwenkwinkel-Bereich Sch₁ reicht von - αₘₐₓ bis + αₘₐₓ. Die Verbindung der Punkte, die Fₘᵢₙ₁ und Fₘₐₓ₁ auf der Kraftachse entsprechen, ergibt die Steigung S₁ oder anders gesagt, die Gesamtcharakteristik der gesamten Schwenkbewegung. Das unerwartete, erfindungsgemäße Resultat der Verschiebung des Anlenkpunktes 9a zu 9b nach Auffindung des Anlenkpunktes 9a, der diese wellenförmige Kurve ergab, ist eine Umwandlung der Schwenkkraft-Kurve F_{(Sch)1} in eine neue, gedrehte, flachere und sattelförmige Schwenkkraft-Kurve F_{(Sch)2}. Die Drehung wird so weit vollzogen, bis vorzugsweise die Steigung S₁ der alten, wellenförmigen Schwenkkraft-Kurve F_{(Sch)1} im Diagramm waagerecht zu liegen kommt, also S₁, nur noch einem einzigen Kraftwert F₁ entspricht. Die neue Schwenkkraft-Kurve F_{(Sch)2} ist nicht mehr stetig und weist eine wesentlich geringere Steigung S₂ auf. Die Gesamtamplitude Aₘₐₓ₂ wird nun von wesentlich niedrigeren Werten Fₘᵢₙ₂ und Fₘₐₓ₂ bzw. der Summe von Amplitude nach oben A_{1'} und Amplitude nach unten A_{2'} bestimmt

Der Operateur hat im Effekt keinen homogenen Schwenkwinkel-Bereich mehr, in dem keine Kraftdifferenz auftritt, dafür aber insgesamt über den gesamten Schwenkwinkel-Bereich wesentlich weniger Kraft aufzuwenden. Dadurch, dass die neuen Kraftwerte Fₘᵢₙ₂ und Fₘₐₓ₂ so gering sind, ist eine Zu- oder Abnahme nicht mehr erheblich bzw. spürbar. Durch das erfindungsgemäße System können somit für bestimmte Anwendungen aufwändige Waagen-Balanciersysteme durch einfache Federnabstützsysteme ersetzt werden, ohne für den Operateur Nachteile im Bedienkomfort einzuhandeln.

Fig. 6b zeigt ein Diagramm für eine Ausbalancierung nicht um die Horizontallage des Horizontalträgers 4 herum in beide Richtungen, sondern eine Auslegung nur für z.B. den unteren Schwenk-Bereich. Die dem ersten proximalen Anlenkpunkt 9a entsprechende Schwenkkraft-Kurve F_{(Sch)3} ist bogenförmig mit anschließender Geraden und reicht über einen gesamten Schwenkwinkel-Bereich Sch₂ von αₘᵢₙ bis αₘₐₓ. Der bestimmte Schwenkbereich Sch_{def2,} in dem die Schwenkkraft konstant ist, reicht von αₘᵢₙ bis α₃. Die Schwenkkraft-Kurve F_{(Sch)3} weist eine Steigung S₃ und eine Amplitude A₃ auf. Auch in diesem Fall bewirkt die erfindungsgemäße Auffindung des neuen proximalen Anlenkpunktes 9b, dass die Schwenkkraft-Kurve F_{(Sch)3} in eine flachere Schwenkkraft-Kurve F_{(Sch)4} mit kleinerer Amplitude A₄ und geringerer Steigung S₄ "gedreht" wird.

### Bezugszeichenliste

- 1 -: Stativ
- 2 -: Vertikalträger
- 3a-d -: Gelenk (Gelenk 3a entspricht 20)
- 4 -: Horizontalträger
- 4a -: Oberer Horizontalträgerarm
- 4b -: Unterer Horizontalträgerarm
- 5 -: Mikroskopträger
- 6, 6a-b -: Platte
- 7 -: Kraftspeicherelement
- 8 -: Bogenförmiges Führungs-Langloch
- 9, 9a-b -: Proximaler Anlenkpunkt
- 10 -: Distaler Anlenkpunkt
- 11 -: Kolbenstange
- 12 -: Zylinder
- 13 -: Schwenkachse von 4
- 14 -: Bewegungsbogen der Last
- 5, 15a -: 1Gewindespindel
- 16 -: Schlitten
- 17, 17a -: Handrad
- 18, 18a-c -: Verstellvorrichtung
- 19 -: Führung von 16
- 20 -: Anlenkpunkt von 4 an 2 (entspricht 3a)
- 21 -: Anlenkelement
- 22a, b -: Fixierung von 21 auf 6b
- 23 -: Spindelmutter
- 24a-d -: Fixierung von 6b an 6a
- 25 -: Bauteil zur Verbindung von 2 und 4 (optional)
- 26a, b -: Führungs-Langloch
- α₁₋₃ -: Winkel zwischen 4 in Horizontallage und L1-3
- αₘᵢₙ -: Minimaler Schwenkwinkel
- αₘₐₓ -: Maximaler Schwenkwinkel
- - αₘₐₓ -: Negativer maximaler Schwenkwinkel
- + αₘₐₓ -: Positiver maximaler Schwenkwinkel
- L -: Hebelarm
- G -: Last, Gewicht
- F_{St,1.2}-: Stützkraft
- H -: Höhe, Entfernung 7 von 20
- F1 -: Schwenkkraft
- F_{min1, 2} -: Minimale Schwenkkraft
- F_{max1, 2} -: Maximale Schwenkkraft
- A₁₋₁ -: Amplitude
- A_{max1,2} -: Gesamtamplitude
- F_{(Sch)1,2} -: Schwenkkraft-Kurve
- S₁₋₄ -: Steigung
- X, X₁ -: Achse
- Z -: Achse
- M_{G} -: Gewichtsmoment
- M_{FSt} -: Stützmoment
- ΔM -: Differenz M_{G}-M_{FSt}
- ΔM₁ -: Differenz M_{FSt}-M_{G}
- Sch_{1,2} -: Gesamter Schwenkwinkel-Bereich
- Sch_{def1, 2} -: Bestimmter Schwenkwinkel-Bereich

## Patentansprüche

1. Stativ (1), insbesondere für Operationsmikroskope, mit einem Vertikalträger (2) entlang einer vertikalen Längsachse (13) und einem daran angelenkten Horizontalträger (4) und einem Kraftspeicherelement (7), das an einem proximalen Anlenkpunkt (9) am Vertikalträger (2) und einem distalen Anlenkpunkt (10) am Horizontalträger (4) angelenkt ist, wobei der Anlenkpunkt (9) durch eine Verstellvorrichtung (18) verschiebbar ist, **dadurch gekennzeichnet, dass** das Stativ eine erste und mindestens eine zweite wahlweise bedienbare Verstellvorrichtung (18, 18c) umfasst, wobei die erste Verstellvorrichtung (18) eine aktive Verstellung des proximalen Anlenkpunktes (9) in einer Horizontalen (X₁) zur Längsachse (13) des Vertikalträgers (2) und die zweite Verstellvorrichtung (18c) den proximalen Anlenkpunkt (9a) entlang einer im Wesentlichen zum Vertikalträger (2) parallelen Achse (Z) verstellbar macht

2. Stativ (1) nach Anspruch 1, **dadurch gekennzeichnet, dass** die Verstellvorrichtung (18, 18a, 18c) den proximalen Anlenkpunkt (9a) bei der Verstellung in der Horizontalen (X₁) um einen Drehpunkt (22a) entlang eines Bogens verschiebbar hält, wobei der Drehpunkt (22a) am Vertikalträger (2) oder an einem fest damit verbundenen Teil (25, 6a) ausgebildet oder angeordnet ist.

3. Stativ (1) nach Anspruch 1, **dadurch gekennzeichnet, dass** die Verstellung entlang der zum Vertikalträger (2) parallelen Achse (Z) entlang eines Bogens erfolgt.

4. Stativ (1) nach Anspruch 2, **dadurch gekennzeichnet, dass** der Teil (25, 6a) als Stativ-Träger-Bauteil (25) oder aus einer Platte (6a) ausgebildet ist, die seitlich des Vertikalträgers (2) abragt.

5. Stativ (1), nach einem der vorhergehenden Ansprüche, **dadurch gekennzeichnet, dass** die Verstellvorrichtung (18b) den proximalen Anlenkpunkt (9a) entlang der Horizontalen (X₁), oder entlang des Bogens (Anspruch 2 oder 3) und/oder entlang der Horizontalen (X₁) in beliebiger Reihenfolge verschiebbar hält.

6. Stativ (1), nach einem der vorhergehenden Ansprüche mit einem Gewichtsmoment (M_{G}) in einem Gelenk (3a) bzw. Anlenkpunkt (20), mit einem Stützmoment (M_{F}) im Gelenk (3a) bzw. Anlenkpunkt (20), welches durch das Kraftspeicherelement (7) erzeugt wird, und mit einem gesamten Schwenkwinkel-Bereich (Sch₂) des Horizontalträgers (4) entlang eines Bewegungsbogens (14) zwischen einem minimalen Schwenkwinkel (αₘᵢₙ) und einem maximalen Schwenkwinkel (αₘₐₓ) bzw. einem gesamten Schwenkwinkel-Bereich (Sch₁) des Horizontalträgers (4) entlang eines Bewegungsbogens (14) zwischen einem maximalen negativen Schwenkwinkel (-αₘₐₓ) und einem maximalen positiven Schwenkwinkel (+αₘₐₓ), **dadurch gekennzeichnet, dass** ein durch Messung der Differenz (ΔM) zwischen Gewichtsmoment (M_{G}) und Stützmoment (M_{F}) oder durch Messung der Differenz (ΔM₁) zwischen Stützmoment (M_{F}) und Gewichtsmoment (M_{G}) ermittelter proximaler Anlenkpunkt (9b) anfahr- bzw. festlegbar ist, dem ein bestimmter Schwenkwinkel-Bereich (α₁-α₂ oder αₘᵢₙ-α₃) entspricht, in dem die Differenz der Momente ΔM bzw. ΔM₁ gleich Null bzw. am minimalsten ist **und dass** anschließend ein proximaler Anlenkpunkt (9c) anfahr- bzw. festlegbar ist, dem eine minimale Differenz (ΔM bzw. ΔM1) über den gesamten Schwenkwinkel-Bereich (Sch₂ bzw. Sch₁) entlang des Bewegungsbogens (14) entspricht.

7. Stativ (1) nach Anspruch 4, **dadurch gekennzeichnet, dass** die Platte (6a) entlang der Horizontalen (X₁) geführt verschiebbar ist.

8. Stativ (1) nach Anspruch 4, **dadurch gekennzeichnet, dass** die Platte (6a) fix am Vertikalträger (2) angeordnet ist und eine weitere Platte (6b) oder ein Anlenkelement (21) entlang der Horizontalen (X₁) geführt verschiebbar ist.

9. Stativ (1) nach einem der Ansprüche 7 oder 8, **dadurch gekennzeichnet, dass** die Führung der verschiebbaren Platte (6a; 6b) oder des verschiebbaren Anlenkelements (21) mit Führungs-Langlöchern (26) oder mit Kulissen-Schlitten und vorzugsweise mit Fixierungen (24) versehen ist.

10. Verwendung eines Stativs (1) mit Verstellvorrichtung (18a, b, c) nach einem der vorhergehenden Ansprüche als Eichvorrichtung für die Anfertigung von Stativen (1) ohne Verstellvorrichtung (18).

11. Verwendung einer Verstellvorrichtung (18b) nach einem der vorhergehenden Ansprüche in einem Stativ (1), insbesondere für Operationsmikroskope, zur aktiven radialen und/oder linearen Verstellung eines proximalen Anlenkpunktes (9a) an einem Vertikalträger (2) eines Kraftspeicherelements (7), quer zum Lot und/oder mit dem Lot.

12. Verwendung nach Anspruch 11, **dadurch gekennzeichnet, dass** die Verstellvorrichtung (18b) so angeordnet ist, dass die radiale Verstellung eine Drehung um eine Fixierung (22a) eines Anlenkelements (21) umfasst und die lineare Verstellung eine Verschiebung des Anlenkelements (21) entlang einer Horizontalen (X₁).

13. Verfahren zur Einstellung eines proximalen Anlenkpunktes (9) eines Kraftspeicherelements (7) in Verbindung mit einem Stativ, insbesondere für Operationsmikroskope, mit einem Vertikalträger (2), mit einer vertikalen Längsachse (13), mit einem daran angelenkten Horizontalträger (4) mit einem Gewichtsmoment (M_{G}) in einem Gelenk (3a) bzw. Anlenkpunkt (20), wobei das Kraftspeicherelement (7) ein Stützmoment (M_{F}) im Gelenk (3a) bzw. Anlenkpunkt (20) erzeugt, wobei das Kraftspeicherelement (7) mit seinem proximalen Anlenkpunkt (9) am Vertikalträger (2) und mit seinem distalen Anlenkpunkt (10) am Horizontalträger (4) angelenkt ist und einem gesamten Schwenkwinkel-Bereich (Sch₂) des Horizontalträgers (4) entlang eines Bewegungsbogens (14) zwischen einem minimalen Schwenkwinkel (αₘᵢₙ) und einem maximalen Schwenkwinkel (αₘₐₓ) bzw. einem gesamten Schwenkwinkel-Bereich (Sch₁) des Horizontalträgers (4) entlang eines Bewegungsbogens (14) zwischen einem maximalen negativen Schwenkwinkel (αₘₐₓ) und einem maximalen positiven Schwenkwinkel (+αₘₐₓ) schwenken kann, **dadurch gekennzeichnet, dass** zuerst
durch wahlweise Verstellung in einer Horizontalen (X₁) zur vertikalen Längsachse (13) oder entlang einer im Wesentlichen zum Vertikalträger (2) parallelen Achse (Z) ein proximaler Anlenkpunkt (9b), dem ein bestimmter Schwenkwinkel-Bereich (α₁-α₂ oder αₘᵢₙ-α₃) entspricht, in dem die Differenz der Momente ΔM, bzw. ΔM₁ gleich Null bzw. am minimalsten ist, ermittelt und eingestellt wird und davon ausgehend
anschließend durch wahlweise Verstellung in der Horizontalen (X₁) zur vertikalen Längsachse (13) oder entlang der im Wesentlichen zum Vertikalträger (2) parallelen Achse (2) ein anderer proximaler Anlenkpunkt (9c) ermittelt bzw. eingestellt wird, dem eine minimale Differenz (ΔM bzw. ΔM1) über den gesamten Schwenkwinkel-Bereich (Sch₂ bzw. Sch₁) entlang des Bewegungsbogens (14) entspricht.

## Claims

1. Stand (1), in particular for surgical microscopes, having a vertical support (2) extending along a vertical longitudinal axis (13), a horizontal support (4) articulated thereto, and an energy storage element (7) which is articulated at a proximal articulation point (9) to the vertical support (2) and a distal articulation point (10) to the horizontal support (4), the articulation point (9) being displaceable by an adjusting device (18), **characterized in that** the stand includes a first and at least a second selectively operable adjusting device (18, 18c), the first adjusting device (18) making possible an active adjustment of the proximal articulation point (9) in relation to the longitudinal axis (13) of the vertical support (2) along a horizontal (X₁), and the second adjusting device (18c) making possible adjustment of the proximal articulation point (9a) along an axis (Z) which is substantially parallel to the vertical support (2).

2. Stand (1) according to Claim 1, **characterized in that** the adjusting device (18, 18a, 18c) keeps the proximal articulation point (9a) displaceable over an arc about a pivot point (22a) during adjustment along the horizontal (x₁), the pivot point (22a) being made or arranged on the vertical support (2) or a part (25, 6a) firmly connected thereto.

3. Stand (1) according to Claim 1, **characterized in that** the adjustment along the axis (z) parallel to the vertical support (2) is made over an arc.

4. Stand (1) according to Claim 2, **characterized in that** the part (25, 6a) takes the form of a stand support component (25) or a plate (6a) projecting laterally from the vertical support (2).

5. Stand (1) according to one of the preceding claims, **characterized in that** the adjusting device (18b) keeps the proximal articulation point (9a) displaceable along the horizontal (x₁), or over the arc (Claim 2 or 3) and/or along the horizontal (X₁) in any sequence.

6. Stand (1) according to one of the preceding claims, having a moment of weight (M_{G}) at a link (3a) or articulation point (20), having a moment of support (M_{F}) at the link (3a) or articulation point (20) which is generated by the energy storage element (7), and having a total pivot angle range (Sch₂) of the horizontal support (4) over a movement arc (14) between a minimum pivot angle (αₘᵢₙ) and a maximum pivot angle (αₘₐₓ) or a total pivot angle range (Sch₁) of the horizontal support (4) over a movement arc (14) between a maximum negative pivot angle (-αₘₐₓ) and a maximum positive pivot angle (+αₘₐₓ), **characterized in that** a proximal articulation point (9b) which is determined by measuring the difference (ΔM) between the moment of weight (M_{G}) and the moment of support (M_{F}) or by measuring the difference (ΔM₁) between the moment of support (M_{F}) and the moment of weight (M_{G}) and to which there corresponds a particular range of pivot angles (α₁-α₂ or αₘᵢₙ-α₃) may be approached or fixed, in which the difference between the moments ΔM or ΔM₁ is equal to zero or is at a minimum, and **in that** a proximal articulation point (9c) to which there corresponds a minimal difference (ΔM or ΔM1) over the total pivot angle range (Sch₂ or Sch₁) over the movement arc (14) may then be approached or fixed.

7. Stand (1) according to Claim 4, **characterized in that** the plate (6a) may be displaced in a manner guided along the horizontal (x₁).

8. Stand (1) according to Claim 4, **characterized in that** the plate (6a) is arranged fixed to the vertical support (2), and a further plate (6b) or an articulation element (21) may be displaced in a manner guided along the horizontal (x₁).

9. Stand (1) according to either of Claims 7 and 8, **characterized in that** guidance of the displaceable plate (6a, 6b) or the displaceable articulation element (21) is provided by means of guide slots (26) or slide carriages and preferably by means of fixing means (24).

10. Use of a stand (1) having an adjusting device (18a, b, c) according to one of the preceding claims as a calibration device for making stands (1) without an adjusting device (18).

11. Use of an adjusting device (18b) according to one of the preceding claims in a stand (1), in particular for surgical microscopes, for the active radial and/or linear adjustment of a proximal articulation point (9a) on a vertical support (2) of an energy storage element (7) transversely to the vertical and/or with the vertical.

12. Use according to Claim 11, **characterized in that** the adjusting device (18b) is arranged such that radial adjustment includes rotation about a fixing means (22a) of an articulation element (21), and linear adjustment includes displacement of the articulation element (21) along a horizontal (X₁).

13. Method of establishing a proximal articulation point (9) of an energy storage element (7) in connection with a stand, in particular for surgical microscopes, having a vertical support (2), a vertical longitudinal axis (13), a horizontal support (4) articulated thereto and having a moment of weight (M_{G}) at a link (3a) or articulation point (20), the energy storage element (7) generating a moment of support (M_{F}) at the link (3a) or articulation point (20), the energy storage element (7) being articulated at its proximal articulation point (9) to the vertical support (2) and at its distal articulation point (10) to the horizontal support (4) and being able to pivot over a total pivot angle range (Sch₂) of the horizontal support (4) over a movement arc (14) between a minimum pivot angle (αₘᵢₙ) and a maximum pivot angle (αₘₐₓ) or a total pivot angle range (Sch₁) of the horizontal support (4) over a movement arc (14) between a maximum negative pivot angle (-αₘₐₓ) and a maximum positive pivot angle (+αₘₐₓ), **characterized in that first,**
by selective adjustment over a horizontal (X₁) in relation to the vertical longitudinal axis (13) or along an axis (Z) substantially parallel to the vertical support (2), a proximal articulation point (9b) to which there corresponds a particular pivot angle range (α₁-α₂ or αₘᵢₙ-α₃) in which the difference between the moments ΔM or ΔM₁ is equal to zero or is at a minimum is determined and established and, taking this as a starting point,
then, by selective adjustment over the horizontal (X₁) in relation to the vertical longitudinal axis (13) or along the axis (Z) substantially parallel to the vertical support (2), another proximal articulation point (9c) to which there corresponds a minimum difference (ΔM or ΔM1) over the total pivot angle range (Sch₂ or Sch₁) over the movement arc (14) is determined or established.

## Revendications

1. Statif (1), en particulier pour la microscopie opératoire, comprenant un support vertical (2) le long d'un axe longitudinal vertical (13) et un support horizontal (4) articulé sur celui-ci et un élément accumulateur d'énergie (7) qui est articulé en un point d'articulation proximal (9) sur le support vertical (2) et en un point d'articulation distal (10) sur le support horizontal (4), le point d'articulation (9) pouvant être déplacé par un dispositif d'ajustement (18), **caractérisé en ce que** le statif comprend un premier et au moins un deuxième dispositif d'ajustement (18, 18c), à commander au choix, dans lequel le premier dispositif d'ajustement (18) permettant un ajustement actif du point d'articulation proximal (9) sur une ligne horizontale (X₁) par rapport à l'axe longitudinal (13) du support vertical (2) et le deuxième dispositif d'ajustement (18c) rend ajustable le point d'articulation proximal (9a) le long d'un axe (Z) substantiellement parallèle au support vertical (2).

2. Statif (1) selon la revendication 1, **caractérisé en ce que** le dispositif d'ajustement (18, 18a, 18c) maintient le point d'articulation proximal (9a), lors de l'ajustement sur la ligne horizontale (X₁) autour d'un point d'appui (22a), pour qu'il soit déplaçable le long d'un arc, le point d'appui (22a) étant réalisé ou disposé sur le support vertical (2) ou sur une pièce (25, 6a) reliée solidement à celui-ci.

3. Statif (1) selon la revendication 1, **caractérisé en ce que** l'ajustement le long de l'axe (Z) parallèle au support vertical (2) s'effectue le long d'un arc.

4. Statif (1) selon la revendication 2, **caractérisé en ce que** la pièce (25, 6a) est réalisée comme un composant de support de statif (25) ou à partir d'une plaque (6a) qui fait saillie latéralement à partir du support vertical (2).

5. Statif (1) selon l'une quelconque des revendications précédentes, **caractérisé en ce que** le dispositif d'ajustement (18b) maintient le point d'articulation proximal (9a) pour qu'il soit déplaçable dans un ordre quelconque le long de la ligne horizontale (X₁) ou le long de l'arc (revendication 2 ou 3) et/ou le long de la ligne horizontale (X₁).

6. Statif (1) selon l'une quelconque des revendications précédentes, avec un moment de poids (M_{G}) dans une articulation (3a) ou un point d'articulation (20), avec un moment sur appui (M_{F}) dans l'articulation (3a) ou le point d'articulation (20) qui est généré par l'élément accumulateur d'énergie (7), et avec une zone totale d'angle de pivotement (Sch₂) du support horizontal (4) le long d'un arc de déplacement (14) entre un angle de pivotement minimal (αₘᵢₙ) et un angle de pivotement maximal (αₘₐₓ) ou une zone totale d'angle de pivotement (Sch₁) du support horizontal (4) le long d'un arc de déplacement (14) entre un angle de pivotement négatif maximal (-αₘₐₓ) et un angle de pivotement positif maximal (+αₘₐₓ), **caractérisé en ce qu'**un point d'articulation proximal (9b), déterminé en mesurant la différence (ΔM) entre le moment de poids (M_{G}) et le moment sur appui (M_{F}) ou en mesurant la différence (ΔM₁) entre le moment sur appui (M_{F}) et le moment de poids (M_{G}), peut être atteint ou fixé, une certaine zone d'angle de pivotement (α₁-α₂ ou αₘᵢₙ-α₃) correspondant audit point d'articulation, dans laquelle la différence des moments ΔM ou ΔM₁ est nulle ou minimale, et **en ce que** par la suite, un point d'articulation proximal (9c) peut être atteint ou fixé auquel correspond une différence minimale (ΔM ou ΔM₁) sur la zone totale d'angle de pivotement (Sch₂ ou Sch₁) le long de l'arc de déplacement (14) .

7. Statif (1) selon la revendication 4, **caractérisé en ce que** la plaque (6a) peut être déplacée en étant guidée le long de la ligne horizontale (X₁).

8. Statif (1) selon la revendication 4, **caractérisé en ce que** la plaque (6a) est disposée de façon fixe sur le support vertical (2) et qu'une autre plaque (6b) ou un élément d'articulation (21) peut être déplacé(e) en étant guidé(e) le long de la ligne horizontale (X₁).

9. Statif (1) selon l'une quelconque des revendications 7 ou 8, **caractérisé en ce que** le guidage de la plaque déplaçable (6a, 6b) ou de l'élément d'articulation déplaçable (21) est munie de trous oblongs de guidage (26) ou de chariots coulissants et de préférence de fixations (24).

10. Utilisation d'un statif (1) avec un dispositif d'ajustement (18a, b, c) selon l'une quelconque des revendications précédentes comme dispositif d'étalonnage pour la fabrication de statifs (1) sans dispositif d'ajustement (18).

11. Utilisation d'un dispositif d'ajustement (18b) selon l'une quelconque des revendications précédentes dans un statif (1), en particulier pour des microscopes opératoires, pour un ajustement actif, radial et/ou linéaire, d'un point d'articulation proximal (9a) sur un support vertical (2) d'un élément accumulateur d'énergie (7), de façon transversale à une ligne verticale et/ou sur la ligne verticale.

12. Utilisation selon la revendication 11, **caractérisée en ce que** le dispositif d'ajustement (18b) est disposé de telle sorte que l'ajustement radial comprend une rotation autour d'une fixation (22a) d'un élément d'articulation (21) et que l'ajustement linéaire comprend un décalage de l'élément d'articulation (21) le long d'une ligne horizontale (x₁).

13. Procédé de réglage d'un point d'articulation (9) d'un élément accumulateur d'énergie (7) en conjonction avec un statif, en particulier pour des microscopes opératoires, comprenant un support vertical (2), un axe longitudinal vertical (13) et un support horizontal (4) articulé sur celui-ci avec un moment de poids (M_{G}) dans une articulation (3a) ou un point d'articulation (20), l'élément accumulateur d'énergie (7) créant un moment sur appui (M_{F}) dans l'articulation (3a) ou le point d'articulation (20), dans lequel l'élément accumulateur d'énergie (7) est articulé par son point d'articulation proximal (9) sur le support vertical (2) et par son point d'articulation distal (10) sur le support horizontal (4), et une zone totale d'angle de pivotement (Sch₂) du support horizontal (4) le long d'un arc de déplacement (14) entre un angle de pivotement minimal (αₘᵢₙ) et un angle de pivotement maximal (αₘₐₓ) ou une zone totale d'angle de pivotement (Sch₁) du support horizontal (4) le long d'un arc de déplacement (14) entre un angle de pivotement négatif maximal (-αₘₐₓ) et un angle de pivotement positif maximal (+αₘₐₓ), **caractérisé en ce que**
d'abord en déterminant et réglant, par un ajustement au choix sur une ligne horizontale (X₁) par rapport à l'axe longitudinal vertical (13) ou le long d'un axe (Z) substantiellement parallèle au support vertical (2), un point d'articulation proximal (9b), auquel correspond une certaine zone d'angle de pivotement (α₁-α₂ ou αₘᵢₙ-α₃), dans laquelle la différence des moments ΔM, ou ΔM₁ est nulle ou minimale, et en partant de ceci
ensuite en déterminant et réglant, par un ajustement au choix sur la ligne horizontale (X₁) par rapport à l'axe longitudinal vertical (13) ou le long de l'axe (Z) substantiellement parallèle au support vertical (2), un autre point d'articulation proximal (9c), auquel correspond une différence minimale (ΔM ou ΔM₁) sur la zone totale d'angle de pivotement (Sch₂ ou Sch₁) le long de l'arc de déplacement (14).
